# FASCICULE DE BREVET EUROPEEN

(11) **EP 0 915 537 B1**
(45) Date de publication et mention de la délivrance du brevet: **27.02.2008**
(21) Numéro de dépôt: 98402762.3
(22) Date de dépôt: 06.11.1998
(51) Int. Cl.: H01R 24/16, H02G 3/18

(54) **Appareillage électrique à encastrer à fixation par griffes**
Elektrische Unterputzvorrichtung mit Befestigungsklemmbacken
Electrical flush mount apparatus with clamping-jaws for attachment

(30) Priorité: 10.11.1997 FR 9714079
(43) Date de publication de la demande: 12.05.1999
(73) Titulaire: LEGRAND FRANCE, 87000 Limoges (FR); LEGRAND SNC, 87000 Limoges (FR)
(72) Inventeur: Daccord, Marcel, 87920 Condat sur Vienne (FR); Leyssenne, Henri, 19210 Lubersac (FR); Pallier, Michel, 87000 Limoges (FR)
(74) Mandataire: Santarelli

(56) Documents cités:
- EP-A- 0 654 881
- DE-A- 2 051 184
- DE-A- 3 603 478

## Description

La présente invention concerne d'une manière générale les appareillages électriques à encastrer dont le boîtier est équipé, latéralement, pour leur fixation à la paroi latérale du logement dans lequel ils doivent être engagés, d'au moins une griffe, et, en pratique, de deux griffes, qui interviennent en positions diamétralement opposées l'une par rapport à l'autre, et qui, sous la commande chacune d'une vis, sont montées mobiles entre une position escamotée, pour laquelle elles se prêtent à un engagement de l'ensemble dans un tel logement, en s'étendant alors par exemple dans le contour hors tout du boîtier, et une position déployée, pour laquelle, faisant saillie hors de ce contour, elles s'opposent au contraire à tout dégagement hors de ce logement, en mordant alors dans la paroi latérale de celui-ci.

Elle vise plus particulièrement le cas où, pour faciliter par exemple un éventuel démontage d'un tel appareillage électrique, c'est-à-dire pour faciliter la dépose éventuelle de celui-ci, des moyens élastiques de rappel sont associés aux griffes, pour les solliciter en permanence en direction de leur position escamotée.

Le plus souvent, à ce jour, ces moyens élastiques de rappel sont constitués par une simple boucle en matière élastique, qui, rapportée sur l'appareillage électrique, ceinture globalement celui-ci, en enserrant ainsi notamment ses griffes.

Mais, outre que cette boucle en matière élastique n'est pas très esthétique, sa tenue sur l'appareillage électrique est parfois incertaine, au détriment de son efficacité.

En outre, elle est inévitablement sujette au vieillissement, et peut ainsi venir à se rompre dans le temps.

Dans les demandes de brevet allemand Nos 2 051 184 et 38 23 117 et dans la demande de brevet européen 0 654 881, il a été proposé d'ajoindre, à chacune des griffes, en substitution à la boucle en matière élastique précédente, une lame de ressort plus ou moins complexe.

Il en résulte, inévitablement, une augmentation dispendieuse des coûts de fabrication et de montage de l'ensemble.

Dans la demande de brevet français qui, déposée le 29 août 1991 sous le No 91 10734, a été publiée sous le No 2 666 700 ainsi que dans la demande de brevet allemand 36 03 478, il a été proposé d'éviter la mise en oeuvre de tels moyens élastiques de rappel en choisissant, pour la vis de commande de chacune des griffes, une vis susceptible d'intervenir dans l'un et l'autre sens sur une telle griffe.

Mais cette solution est elle aussi relativement coûteuse.

La présente invention a d'une manière générale pour objet une disposition qui s'avère au contraire avantageusement relativement économique à mettre en oeuvre et qui conduit à d'autres avantages.

De manière plus précise, elle a pour objet un appareillage électrique à encastrer du genre dont le boîtier est équipé, latéralement, pour sa fixation à la paroi latérale du logement dans lequel il doit être engagé, d'au moins une griffe comportant une partie médiane qui présente un perçage pour le passage d'une vis, ladite griffe étant montée mobile sous la commande de la vis entre une position escamotée et une position déployée, avec, associés à cette griffe, des moyens de rappel qui la sollicitent en permanence en direction de sa position escamotée, cet appareillage électrique étant d'une manière générale caractérisé en ce que, d'une part, la griffe a globalement une configuration en U, avec deux jambages latéraux qui s'étendent chacun respectivement de part et d'autre de la partie médiane, et en ce que, d'autre part, les moyens élastiques de rappel associés à cette griffe comportent un ressort en épingle présentant une partie médiane, par laquelle il prend appui, directement ou indirectement, sur le boîtier, et deux ailes latérales, qui portent chacune respectivement sur les deux jambages latéraux de la griffe.

Un tel ressort en épingle est particulièrement aisé à fabriquer et à monter.

En outre, une fois monté, il est avantageusement imperdable, et il conserve toute son efficacité dans le temps.

Il est donc particulièrement fiable.

Enfin, il ne nuit avantageusement pas à l'esthétique de l'ensemble.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un appareillage électrique suivant l'invention, vu de dessus ;
la figure 2 en est, à échelle différente, une vue partielle en coupe transversale, suivant la ligne II-II de la figure 1 ;
la figure 3 en est une autre vue en perspective, vu de dessous ;
la figure 4 est, à échelle légèrement supérieure, une vue en perspective éclatée de cet appareillage électrique, après élimination de l'organe de basculement qu'il comporte ;
la figure 5 est, à échelle encore supérieure, une vue en perspective d'une des griffes qui l'équipent ;
la figure 6 est une vue en coupe transversale de cette griffe, suivant la ligne VI-VI de la figure 5 ;
la figure 7 est une vue en perspective du ressort en épingle formant les moyens élastiques de rappel associés à cette griffe ;
la figure 8 est, à échelle différente, une vue partielle en coupe transversale de l'appareillage électrique suivant l'invention, suivant la ligne VIII-VIII de la figure 1, pour la position escamotée de la griffe représentée ;
la figure 9 reprend, à échelle supérieure, le détail de la figure 8 repéré par un encart IX sur cette figure 8 ;
la figure 10 est, suivant la ligne X-X de la figure 8, une autre vue partielle en coupe de cet appareillage électrique ;
la figure 11 est une vue partielle en coupe transversale analogue à celle de la figure 8, pour la position déployée de la griffe représentée ;
la figure 12 est une vue partielle en coupe qui, déduite de celle de la figure 10, correspond elle aussi à la position déployée de cette griffe ;
la figure 13 est, à échelle différente, une autre vue partielle en coupe transversale de l'appareillage électrique suivant l'invention, suivant la ligne XIII-XIII de la figure 4;
la figure 14 est une vue en perspective qui, analogue à celle de la figure 7, se rapporte à une variante de réalisation du ressort en épingle associé à une griffe ;
la figure 15 est une partielle en perspective, qui, reprenant pour partie celle de la figure 4, se rapporte à la mise en oeuvre de cette variante de réalisation ;
la figure 16 est une vue partielle en plan du boîtier correspondant, suivant la flèche XVI de la figure 15 ;
la figure 17 est, à échelle différente, une vue partielle en coupe transversale qui, analogue à celle de la figure 8, se rapporte également à cette variante de réalisation ;
la figure 18 reprend, à échelle supérieure, le détail de la figure 17 repéré par un encart XVIII sur cette figure 17 ;
la figure 19 est une vue partielle en coupe transversale qui, analogue, elle aussi, à celle de la figure 8, se rapporte à une autre variante de réalisation ;
la figure 20 est une vue en perspective de la griffe mise en oeuvre dans cette variante de réalisation ;
la figure 21 est une vue partielle en coupe transversale qui, analogue à celle de la figure 19, se rapporte elle aussi à une autre variante de réalisation.

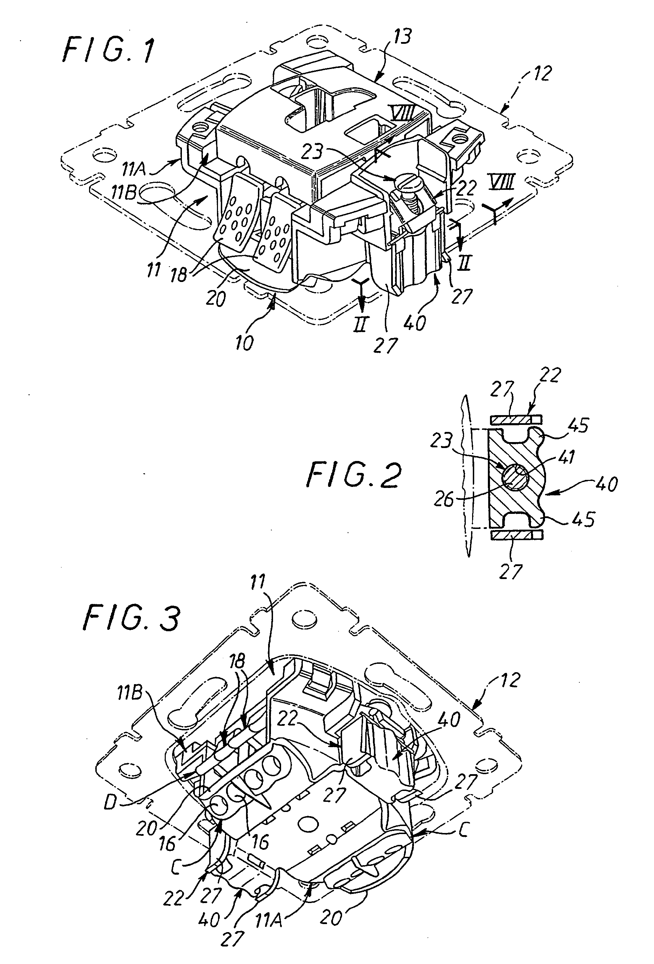

Les figures 1 à 18 illustrent, à titre d'exemple, l'application de l'invention au cas où l'appareillage électrique 10 à encastrer est un interrupteur.

Un tel appareillage électrique étant bien connu par lui-même, et ne relevant pas en propre de la présente invention, il ne sera pas décrits dans tous ses détails ici.

Seuls en seront décrits les éléments nécessaires à la compréhension de l'invention.

Il suffira, pour l'essentiel, d'indiquer, à ce sujet, que dans les formes de réalisation représentées, le mécanisme, non visible, de cet appareillage électrique 10, est enfermé dans un boîtier 11, en matière isolante, et que, par l'intermédiaire de celui-ci, l'ensemble est adapté à être rapporté, par exemple par encliquetage, sur un support 12, qui est schématisé en traits interrompus sur les figures 1 et 3, et qui est lui-même propre à permettre de rapporter l'appareillage électrique 10 sur un boîtier, ou une boîte, non représenté, formant un logement pour celui-ci, ou, plus précisément, pour son mécanisme.

Dans les formes de réalisation représentées, le boîtier 11 est formé de deux parties, à savoir, une partie 11A inférieure, formant socle, et une partie 11B supérieure, formant capot.

Ainsi qu'il est visible sur la figure 1, il est équipé, en façade, c'est-à-dire à la face supérieure de sa partie 11B supérieure, d'un organe de basculement 13, qui, pour la commande du mécanisme sous-jacent, est monté pivotant sur cette partie 11B supérieure, sous le contrôle d'un doigt de manoeuvre, non représenté, à la disposition de l'usager.

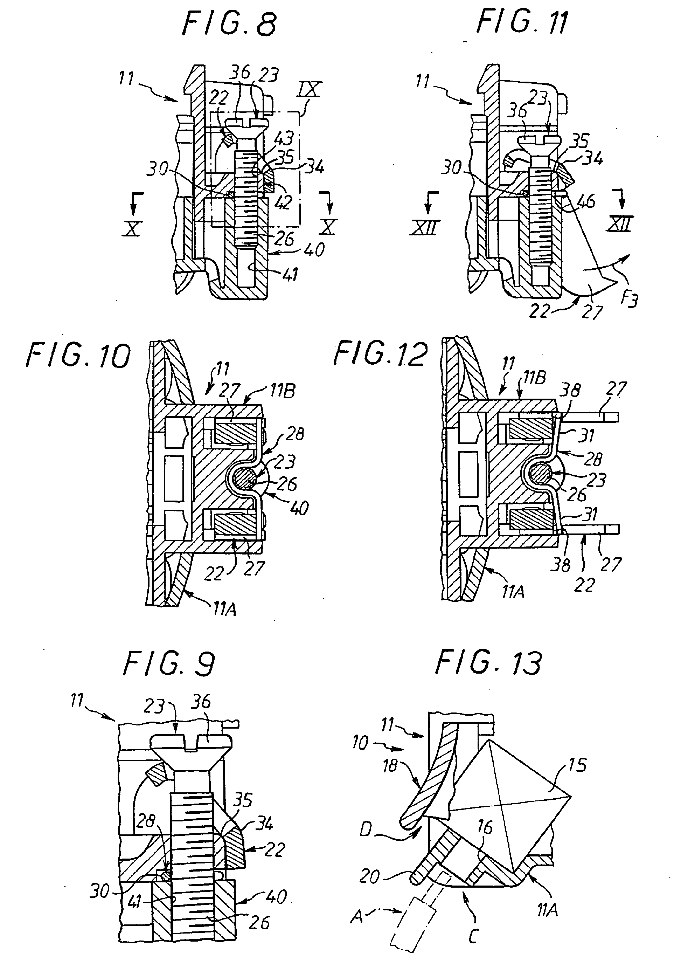

Sur deux côtés opposés de sa face inférieure, la partie 11A inférieure, formant socle, du boîtier 11, comporte deux zones de connexion C donnant chacune accès à deux bornes de connexion 15, tel que schématisé pour l'une d'elles sur la figure 13, avec, pour chacune de ces bornes de connexion 15, deux entrées de câble 16 propres chacune à l'engagement d'un quelconque conducteur électrique 17, tel que schématisé en traits interrompus sur cette figure 13.

En correspondance, chacune respectivement, avec ces deux zones de connexion C, la partie 11A inférieure du boîtier 11 comporte, sur chacune de ses deux faces latérales, une zone de déconnexion D à laquelle interviennent deux organes de déconnexion 18, à raison d'un par borne de connexion 15.

Préférentiellement, et cela est le cas dans les formes de réalisation représentées, chaque zone de connexion C est isolée de la zone de déconnexion D correspondante par une languette 20 qui, venue d'un seul tenant du boîtier 11, et, plus précisément, de la partie 11A inférieure de celui-ci, fait saillie en oblique vers l'extérieur le long de l'arête correspondante de cette partie 11A inférieure.

Dans les formes de réalisation représentées, le bord libre de cette languette 20 s'étend de manière globalement arrondie, et, plus précisément, convexe, de l'une à l'autre des extrémités de l'arête correspondante de la partie 11 A inférieure du boîtier 11.

Pour la fixation de l'appareillage électrique 10 à la paroi latérale du logement dans lequel il doit être engagé, le boîtier 11 de cet appareillage électrique 10, et, plus précisément, la partie 11 A inférieure de ce boîtier 11, est équipé, latéralement, d'au moins une griffe 22, qui, sous la commande d'une vis 23, et suivant des dispositions décrites plus en détail ultérieurement, est montée mobile entre une position escamotée, pour laquelle elle se prête à un tel engagement, en s'étendant alors sensiblement dans le contour hors tout du boîtier 11, tel que représenté sur les figures 1 à 3, 8 et 10, et une position déployée, pour laquelle, faisant saillie hors de ce contour, tel que représenté sur les figures 11 et 12, elle s'oppose au contraire à tout dégagement de cet appareillage électrique 10 hors de ce logement, en mordant alors dans la paroi latérale de ce dernier.

Préférentiellement, et cela est le cas dans les formes de réalisation représentées, deux griffes 22 sont prévues, en positions diamétralement opposées l'une par rapport à l'autre, et, pour chacune de ces griffes 22, il y a une vis 23.

En pratique, les deux griffes 22 s'étendent en croix par rapport aux zones de connexion C et de déconnexion D.

De manière connue en soi, également, des moyens élastiques de rappel sont associées à chacune des griffes 22, et ils sollicitent en permanence une telle griffe 22 en direction de sa position escamotée.

Suivant l'invention, et conjointement, d'une part, chacune des griffes 22 a, globalement, une configuration en U, avec une partie médiane 24, qui présente un perçage 25 pour le passage de la vis 23 correspondante, et, plus précisément, pour le passage du fût 26 de cette vis 23, et deux jambages latéraux 27, qui s'étendent chacun respectivement de part et d'autre de cette partie médiane 24, et, d'autre part, les moyens élastiques de rappel associés à une telle griffe 22 comportent un ressort en épingle 28 présentant une partie médiane 30, par laquelle il prend appui, directement ou indirectement, sur le boîtier 11, et deux ailes latérales 31, qui portent chacune respectivement sur les deux jambages latéraux 27 de la griffe 22.

En pratique, les deux griffes 22 sont identiques l'une à l'autre, et leurs moyens élastiques de rappel sont exclusivement constitués par le ressort en épingle 28 qui leur est associé.

Dans les formes de réalisation représentées, la partie médiane 24 d'une telle griffe 22 s'étend globalement en oblique par rapport à la direction d'allongement de ses jambages latéraux 27, et, entre ceux-ci, elle présente, du côté de ces jambages latéraux 27 tourné vers l'extérieur, un prolongement 32, qui fait avec sa partie courante 33 un dièdre 34 d'angle A obtus, avec la concavité de ce dièdre 34 tournée vers les jambages latéraux 27.

Par le creux de ce dièdre 34, chacune des griffes 22 est montée pivotante sur une arête 35 du boîtier 11, ainsi qu'il ressort des figures 8 et 11 pour l'une d'elles.

En pratique, dans les formes de réalisation plus particulièrement représentées sur les figures 1 à 18, cette arête 35 appartient à la partie 11B supérieure du boîtier 11.

Dans les formes de réalisation représentées, le perçage 25 que présente la partie médiane 24 d'une griffe 22 est allongé en boutonnière suivant la ligne de plus grande pente de cette partie médiane 24.

Il présente, transversalement, une dimension intermédiaire entre celle du fût 26 de la vis 23 correspondante et celle de la tête 36 de cette vis 23.

Dans les formes de réalisation représentées, les jambages latéraux 27 des griffes 22 comportent chacun, sensiblement au tiers de leur hauteur, un décrochement 38 par lequel ils sont en prise avec l'aile latérale 31 correspondante du ressort en épingle 28 associé à une telle griffe 22.

Par exemple, et cela est le cas dans les formes de réalisation représentées sur les figures 1 à 18, ce décrochement 38 appartient à une échancrure affectant en creux la tranche correspondante des jambages latéraux 27.

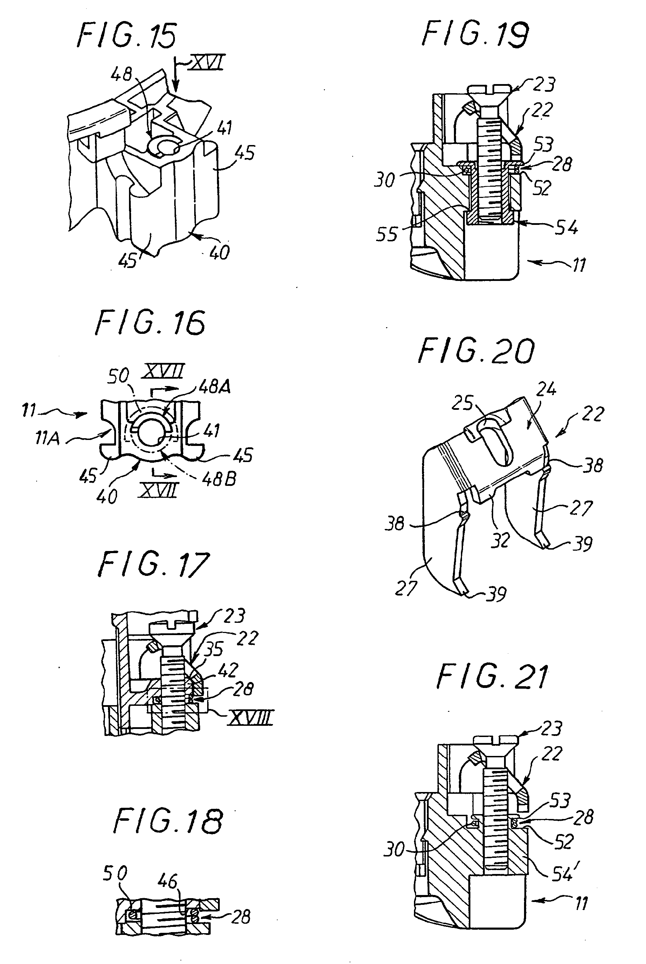

En variante, figure 20, il appartient à un bec qui fait saillie sur cette tranche.

Dans les formes de réalisation représentées, les jambages latéraux 27 des griffes 22 comportent chacun, à leur extrémité libre, sur cette même tranche, une pointe d'ancrage 39.

Dans les formes de réalisation plus particulièrement représentées sur les figures 1 à 18, et pour des raisons qui, ne relevant pas de la présente invention, n'ont pas à être explicitées ici, les jambages latéraux 27 des griffes 22 présentent, chacun, transversalement, une zone d'inflexion Z, qui s'étend par exemple sensiblement au niveau de leur décrochement 38, et dont il résulte que la distance qui les sépare l'un de l'autre est plus grande à leur extrémité libre qu'au voisinage de la partie médiane 24 dont ils sont issus.

En variante, figure 20, ils sont droits.

Entre les jambages latéraux 27 de chacune des griffes 22, le boîtier 11, et, plus précisément, la partie 11 A inférieure de ce boîtier 11, comporte, en saillie, un bossage 40 à la faveur duquel intervient la vis 23 qui commande une telle griffe 22, ce bossage 40 comportant, à cet effet, un alésage 41.

Dans les formes de réalisation plus particulièrement représentées sur les figures 1 à 18, cet alésage 41 est borgne, et la vis 23 mord directement sur sa paroi interne.

En outre, dans ces formes de réalisation, le bossage 40 est surmonté par une console 42, qui appartient à la partie 11 B supérieure du boîtier 11, et qui, pour le passage de la vis 23, présente un perçage 43.

L'arête 35 sur laquelle chacune des griffes 22 est montée pivotante est l'arête avant supérieure de la console 42 correspondante.

Préférentiellement, et cela est le cas dans les formes de réalisation représentées, chacun des bossages 40 que présente le boîtier 11 pour l'intervention des vis 23 comporte, latéralement, le long des arêtes de sa face avant, c'est-à-dire le long de celles des arêtes de cette face avant qui sont parallèles aux vis 23, sur une partie au moins de la hauteur de cette face avant, et, en pratique, sur la totalité de cette hauteur, des ailettes 45, qui, chacune respectivement, et ainsi qu'il est mieux visible sur la figure 2, s'étendent en direction des jambages latéraux 27 de la griffe 22 correspondante, jusqu'au voisinage de ceux-ci.

L'usager qui vient à manipuler l'appareillage électrique 10 se trouve ainsi avantageusement protégé au mieux de l'agressivité relative des griffes 22 lorsque celles-ci sont en position escamotée.

Dans les formes de réalisation représentées, le ressort en épingle 28 associé à chacune des griffes 22 contourne, par sa partie médiane 30, la vis 23 qui commande une telle griffe 22.

Dans la forme de réalisation plus particulièrement représentée sur les figures 1 à 13, cette partie médiane 30 a un contour ouvert suivant une configuration générale en U, et sa concavité est tournée vers l'extérieur.

Par cette partie médiane 30, le ressort en épingle 28 est inséré, sans cependant être nécessairement serré, entre les deux parties 11 A, 11 B constitutives du boîtier 11, et, plus précisément, entre la surface supérieure du bossage 40 concerné de la partie 11 A inférieure de ce boîtier 11 et le sommet d'un décrochement 46 que présente en correspondance la console 42 de sa partie 11 B supérieure.

Conjointement, dans cette forme de réalisation, la partie médiane 30 du ressort en épingle 28 ne prend appui sur le boîtier 11 qu'indirectement, par l'intermédiaire de la vis 23 qui commande la griffe 22 concernée, en portant directement sur cette vis 23, et, plus précisément, sur son fût 26, sur un demi-périmètre de la section transversale de ce fût 26.

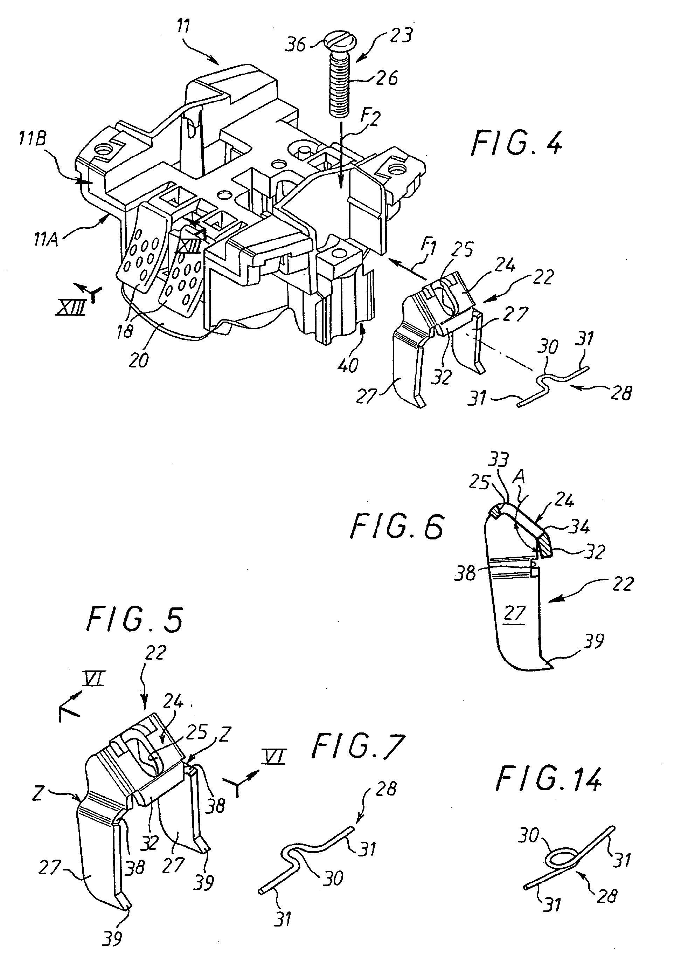

Au montage, et tel que schématisé par une flèche F1 pour l'une d'elles sur la figure 4, les griffes 22 sont d'abord mises en place, puis il est procédé, suivant cette même flèche F1, à la mise en place des ressorts en épingle 28, et enfin, suivant la flèche F2 de la figure 4, il est procédé à la mise en place des vis 23, qui, dès lors, assurent le maintien de l'ensemble.

Si, partant de la position escamotée représentée sur les figures 8 à 10, il est procédé à un vissage d'une des vis 23, celle-ci provoque, par sa tête 36, le basculement de la griffe 22, par pivotement autour de l'arête 35 concernée du boîtier 11, et, donc, tel que schématisé par une flèche F3 sur la figure 11, le passage de cette griffe 22 de sa position escamotée à sa position déployée.

Ce faisant, le ressort en épingle 28 associé à la griffe 22 se trouve progressivement contraint.

Par suite, si la vis 23 est dévissée, ce ressort en épingle 28 ramène de lui-même en position escamotée la griffe 22, suivant un mouvement de basculement de celle-ci inverse du précédent.

Suivant la variante de réalisation représentée sur les figures 14 à 18, la partie médiane 30 du ressort en épingle 28 associé à chacune des griffes 22 a un contour fermé suivant une spire hélicoïdale.

Préférentiellement, et cela est le cas dans la forme de réalisation représentée, cette partie médiane 30 s'étend alors vers l'intérieur par rapport aux ailes latérales 31 de ce ressort en épingle 28.

Préférentiellement, également, et, ainsi qu'il est mieux visible sur les figures 16 à 18, cela est le cas dans la forme de réalisation représentée, la partie 11 A inférieure du boîtier 11 présente, en saillie sur la face supérieure de son bossage 40, pour l'assise de la partie médiane 30 du ressort en épingle 28, une nervure 48A, qui, allongée suivant un demi-cercle, a une hauteur qui croît d'une de ses extrémités à l'autre, et, de manière complémentaire, la partie 11 B supérieure du boîtier 11 présente en saillie, sur le sommet du décrochement 46 de sa console 42, une nervure 48B de même type, qui, tel que schématisé en traits interrompus sur la figure 16, complète le cercle correspondant.

Préférentiellement, enfin, et cela est le cas dans la forme de réalisation représentée, l'une au moins des deux parties 11A, 11B constitutives du boîtier 11 présente, en saillie, autour sa nervure 48A, 48B, à distance de celle-ci, une paroi enveloppante 50 propre à un maintien du ressort en épingle 28.

Par exemple, tel que schématisé en traits interrompus sur la figure 16, et tel que représenté en traits continus sur les figures 17 et 18, cette paroi enveloppante 50 appartient à la partie 11 B supérieure du boîtier 11.

Ainsi qu'il est aisé de le comprendre, les nervures 48A, 48B des parties 11A, 11B constitutives du boîtier 11 facilitent la mise en place du ressort en épingle 28 associé aux griffes 22 et assurent une bonne assise à celui-ci, en épousant au mieux la forme de sa partie médiane 30.

Pour le reste, les dispositions sont du même type que celles précédemment décrites.

Les figures 19 à 21 illustrent, maintenant, à titre d'exemple, l'application de l'invention au cas où le boîtier 11 de l'appareillage électrique 10 à encastrer est en une seule et même partie.

Cela est le cas, par exemple, lorsque cet appareillage électrique 11 est un socle de prise de courant.

Dans un tel cas, le ressort en épingle 28 associé suivant l'invention à chacune des griffes 22 est inséré, par sa partie médiane 30, entre un épaulement 52 du boîtier 11 et une collerette de sertissage 53 solidaire de celui-ci.

Par exemple, figure 19, la collerette de sertissage 53 appartient à un fût 54, qui, distinct du boîtier 11, est contrebuté par celui-ci, en présentant à cet effet un épaulement 55 à son extrémité opposée, et avec lequel est en prise à vissage la vis 23 qui commande une telle griffe 22.

En variante, figure 21, la collerette de sertissage 53 est d'un seul tenant avec le boîtier 11.

Dans l'un et l'autre cas, initialement droite, cette collerette de sertissage 53 est rabattue latéralement, par simple refoulement.

Comme précédemment, il n'en résulte pas nécessairement un quelconque serrage pour la partie médiane 30 du ressort en épingle 28.

Dans les formes de réalisation représentées, ce ressort en épingle 28 est, à titre d'exemple, du type de celui représenté à la figure 14, mais, en variante, il pourrait aussi bien être du type de celui représenté à la figure 7.

Pour le reste, les dispositions sont du même type que celles précédemment décrites.

Il est à souligner, toutefois, que, dans la forme de réalisation représentée sur la figure 21, c'est directement que, par sa partie médiane 30, le ressort en épingle 28 prend appui sur le boîtier 11, puisque, comme la collerette de sertissage 53 qui lui fait suite, le fût 54' entouré par cette partie médiane 30 appartient à ce boîtier 11.

## Revendications

1. Appareillage électrique à encastrer du genre dont le boîtier (11) est équipé, latéralement, pour sa fixation à la paroi latérale du logement dans lequel il doit être engagé, d'au moins une griffe (22) comportant une partie médiane (24) qui présente un perçage (25) pour le passage d'une vis (23), ladite griffe (22) étant montée mobile sous la commande de la vis (23) entre une position escamotée et une position déployée, avec, associés à cette griffe (22), des moyens élastiques de rappel qui la sollicitent en permanence en direction de sa position escamotée, **caractérisé en ce que**, d'une part, la griffe (22) a globalement une configuration en U, avec deux jambages latéraux (27) qui s'étendent chacun respectivement de part et d'autre de la partie médiane (24), et **en ce que**, d'autre part, les moyens élastiques de rappel associés à cette griffe (22) comportent un ressort en épingle (28) présentant une partie médiane (30), par laquelle il prend appui, directement ou indirectement, sur le boîtier (11), et deux ailes latérales (31), qui portent chacune respectivement sur les deux jambages latéraux (27) de la griffe (22).

2. Appareillage électrique suivant la revendication 1, **caractérisé en ce que**, par sa partie médiane (30), le ressort en épingle (28) associé à la griffe (22) contourne la vis (23) qui commande celle-ci.

3. Appareillage électrique suivant la revendication 2, **caractérisé en ce que** la partie médiane (30) du ressort en épingle (28) associé à la griffe (22) a un contour ouvert, suivant une configuration en U.

4. Appareillage électrique suivant la revendication 3, **caractérisé en ce que** la concavité du contour de la partie médiane (30) du ressort en épingle (28) est tournée vers l'extérieur.

5. Appareillage électrique suivant la revendication 2, **caractérisé en ce que** la partie médiane (30) du ressort en épingle (28) associé à la griffe (22) a un contour fermé, suivant une spire hélicoïdale.

6. Appareillage électrique suivant la revendication 5, **caractérisé en ce que** la partie médiane (30) du ressort en épingle (28) s'étend vers l'intérieur par rapport aux ailes latérales (31) de celui-ci.

7. Appareillage électrique suivant l'une quelconque des revendications 1 à 6, **caractérisé en ce que**, le boîtier (11) étant formé de deux parties (11 A, 11 B), à savoir, une partie (11A) inférieure, formant socle, et une partie (11B) supérieure, formant capot, le ressort en épingle (28) associé à la griffe (22) est inséré entre ces deux parties (11 A, 11 B) par sa partie médiane (30).

8. Appareillage électrique suivant les revendications 5 et 7, prises conjointement, **caractérisé en ce que**, pour l'assise de la partie médiane (30) du ressort en épingle (28) associé à la griffe (22), la partie (11A) inférieure du boîtier (11) présente, en saillie, une nervure (48A), qui, allongée suivant un demi-cercle, a une hauteur qui croît d'une de ses extrémités à l'autre, et, de manière complémentaire, sa partie (11B) supérieure présente, en saillie, une nervure (48B) de même type.

9. Appareillage électrique suivant la revendication 8, **caractérisé en ce que**, l'une au moins des deux parties (11A, 11 B) constitutives du boîtier (11) présente, en saillie, autour de sa nervure (48A, 48B), à distance de celle-ci, une paroi enveloppante (50) propre à un maintien du ressort en épingle (28).

10. Appareillage électrique suivant l'une quelconque des revendications 1 à 6, **caractérisé en ce que** le ressort en épingle (28) associé à la griffe (22) est inséré, par sa partie médiane (30), entre un épaulement (52) du boîtier (11) et une collerette de sertissage (53) solidaire de celui-ci.

11. Appareillage électrique suivant la revendication 10, **caractérisé en ce que** la collerette de sertissage (53) appartient à un fût (54), qui, distinct du boîtier (11), est contrebuté par celui-ci, et avec lequel est en prise à vissage la vis (23) qui commande la griffe (22).

12. Appareillage électrique suivant la revendication 10, **caractérisé en ce que** la collerette de sertissage (53) est d'un seul tenant avec le boîtier (11).

13. Appareillage électrique suivant l'une quelconque des revendications 1 à 12, **caractérisé en ce que** la partie médiane (24) de la griffe (22) s'étend globalement en oblique par rapport à la direction d'allongement de ses jambages latéraux (27), et, entre ceux-ci, elle présente, du côté de ces jambages latéraux (27) tourné vers l'extérieur, un prolongement (32) qui fait avec sa partie courante (33) un dièdre (34) d'angle (A) obtus, avec la concavité de ce dièdre (34) tournée vers les jambages latéraux (27).

14. Appareillage électrique suivant l'une quelconque des revendications 1 à 13, **caractérisé en ce que** les jambages latéraux (27) de la griffe (22) comportent chacun un décrochement (38) par lequel ils sont en prise avec l'aile latérale (31) correspondante du ressort en épingle (28) associé à une telle griffe (22).

15. Appareillage électrique suivant l'une quelconque des revendications 1 à 14, **caractérisé en ce que**, le boîtier (11) comportant, entre les jambages latéraux (27) de la griffe (22), un bossage (40) à la faveur duquel intervient la vis (23) qui commande celle-ci, ce bossage (40) comporte, latéralement, le long des arêtes de sa face avant, sur une partie au moins de la hauteur de cette face avant, des ailettes (45), qui, chacune respectivement, s'étendent en direction de ces jambages latéraux (27), jusqu'au voisinage de ceux-ci.

16. Appareillage électrique suivant l'une quelconque des revendications 1 à 15, **caractérisé en ce que** deux griffes (22) sont prévues, en positions diamétralement opposées l'une par rapport à l'autre.

## Claims

1. An electrical device to be embedded, of the type wherein the housing (11), for fixture thereof to the lateral wall of the recess into which it is to be engaged, is equipped laterally with at least one claw (22) comprising a median part (24) which has a hole (25) for a screw (23) to pass therethrough, said claw (22) being movably mounted, subject to control of the screw (23), between an embedded position and a projecting position, with, associated with that claw (22), resilient means of retraction which urge it permanently in the direction of its embedded position, **characterized in that**, on the one hand, the claw (22) has globally a U-configuration with two lateral legs (27), each of which extends respectively from each side of the median part (24) and **in that**, on the other hand, the elastic means of retraction, associated with this claw (22) consist of a spring pin (28) with a median part (30) by which it rests directly or indirectly on the housing (11), and two lateral wings (31) each of which respectively is supported on the two lateral legs (27) of the claw (22).

2. An electrical device according to Claim 1, **characterized in that** the spring pin (28), associated with the claw (22), encircles the screw (23) which controls it, by its median part (30).

3. An electrical device according to Claim 2, **characterized in that** the median part (30) of the spring pin (28) associated with the claw (22) has an open contour, following a U-shaped configuration.

4. An electrical device according to Claim 3, **characterized in that** the concavity of the contour of the median part (30) of the spring pin (28), is turned outwards.

5. An electrical device according to Claim 2, **characterized in that** the median part (30) of the spring pin (28), associated with the claw (22), has a closed contour, following a helicoidal spiral.

6. An electrical device according to Claim 5, **characterized in that** the median part (30) of the spring pin (28) extends inwards with regard to the lateral wings (31) thereof

7. An electrical device according to any one of the claims 1-6, **characterized in that** in the housing (11), being formed of two parts (11A, 11B), namely a lower part (11A) forming the socket-base, and an upper part (11B) forming the cap, the spring pin (28) associated with the claw (22) is inserted between these two parts (11A, 11B) by means of its median part (30).

8. An electrical device according to Claims 5 and 7, taken conjointly, **characterized in that** for the seating of the said median part (30) of the spring pin (28) associated with the claw (22), the lower part (11A) of the housing (11) has a projecting rib (48A) which extends along a semi-circle, increases in height from one of its ends to the other, and, in a complementary manner, its upper part (11B) has a projecting rib (48B) of the same type.

9. An electrical device according to Claim 8, **characterized in that** at least one of the two parts (11A, 11B) of the housing (11) has in projecting relationship around its rib (48A, 48B), at a spacing therefrom, an enveloping wall (50) capable of holding the spring pin (28).

10. An electrical device according to any one of the claims 1 to 6 **characterized in that** the spring pin (28) associated with the claw (22) is inserted, by means of its median part (30) between a shoulder (52) of the housing (11) and a clamping ring (53) which is integral with it.

11. An electrical device according to Claim 10, **characterized in that** the clamping ring (53) belongs to a body (54) which, separate from the housing (11), is supported by it, and into which is screwed the screw (23) which controls the claw (22).

12. An electrical device according to Claim 10, **characterized in that** the clamp ring (53) is formed in one piece with the housing (11).

13. An electrical device according to any one of the claims 1 to 12, **characterized in that** the median part (24) of the claw (22) extends generally obliquely with regard to the direction in which the lateral legs (27) extend, and, between said legs, turning outwards from the side of these lateral legs (27), it has an elongation (32), which, with its common part (33), makes a dihedron (34) at an obtuse angle (A) with the concavity of that dihedron (34) turned towards the lateral legs (27).

14. An electrical device according to any one of the claims 1 to 13, **characterized in that** each one of the lateral legs (27) of the claw (22) comprises a hook (38) by which they are engaged with the corresponding lateral wing (31) of the spring pin (28) associated with said claw (22).

15. An electrical device according to any one of the claims 1 to 14 **characterized in that** between the lateral legs (27) of the claw (22), the housing (11) consists of a boss (40) by virtue of which the screw (23) which controls the claw (22) comes into play, the boss (40) comprising, laterally, along the edges of its front face, over at least part of the height of that front face, wings (45), each of which respectively extends in the direction of the corresponding legs (27) of the claw (22), into their vicinity.

16. An electrical device according to any one of the claims 1 to 15, **characterized in that** two claws (22) are provided in mutually diametrically opposing positions.

## Patentansprüche

1. Elektrisches Installationsgerät für Unterputz des Typs, dessen Gehäuse (11) seitlich zu seiner Befestigung an der Seitenwand der Aufnahme, in die es eingesetzt werden soll, mit wenigstens einer Kralle (22) versehen ist, die einen Mittelteil (24) mit einer Bohrung (25) zum Hindurchführen einer Schraube (23) aufweist, wobei die Kralle (22) bei Betätigung der Schraube (23) zwischen einer versenkten und einer ausgefahrenen Position bewegbar gelagert ist, wobei elastische Rückstellmittel, die der Kralle (22) zugeordnet sind, diese ständig in Richtung ihrer versenkten Position drängen,
**dadurch gekennzeichnet, dass** einerseits die Kralle (22) allgemein eine U-förmige Ausbildung hat, mit zwei seitlichen Schenkeln (27), die sich jeweils beiderseits des Mittelteils (24) erstrecken, und dass andererseits die der Kralle (22) zugeordneten elastischen Rückstellmittel eine Haarnadelfeder (28) aufweisen, die einen Mittelteil (30), durch den diese direkt oder indirekt am Gehäuse (11) zur Anlage kommt, und zwei seitliche Flügel (31) aufweist, die jeweils auf den beiden seitlichen Schenkeln (27) der Kralle (22) ruhen.

2. Elektrisches Installationsgerät nach Anspruch 1,
**dadurch gekennzeichnet, dass** die der Kralle (22) zugeordnete Haarnadelfeder (28) mit ihrem Mittelteil (30) um die Schraube (23) herumgeführt ist, durch die sie betätigt wird.

3. Elektrisches Installationsgerät nach Anspruch 2,
**dadurch gekennzeichnet, dass** der Mittelteil (30) der der Kralle (22) zugeordneten Haarnadelfeder (28) einen offene Umfang gemäß einer U-förmigen Ausbildung hat.

4. Elektrisches Installationsgerät nach Anspruch 3,
**dadurch gekennzeichnet, dass** die Konkavität des Umfangs des Mittelteils (30) der Haarnadelfeder (28) nach außen gerichtet ist.

5. Elektrisches Installationsgerät nach Anspruch 2,
**dadurch gekennzeichnet, dass** der Mittelteil (30) der der Kralle (22) zugeordneten Haarnadelfeder (28) einen geschlossenen Umfang gemäß einer spiralförmigen Windung hat.

6. Elektrisches Installationsgerät nach Anspruch 5,
**dadurch gekennzeichnet, dass** der Mittelteil (30) der Haarnadelfeder (28) in Bezug auf deren seitliche Flügel (31) nach innen verläuft.

7. Elektrisches Installationsgerät nach einem der Ansprüche 1 bis 6,
**dadurch gekennzeichnet, dass** die der Kralle (22) zugeordnete Haarnadelfeder (28), da das Gehäuse (11) aus zwei Teilen (11A, 11B) gebildet ist, nämlich einem einen Sockel bildenden unteren Teil (11A) und einem eine Kappe bildenden oberen Teil (11B), mit ihrem Mittelteil (30) zwischen diesen beiden Teilen (11A, 11B) eingefügt ist.

8. Elektrisches Installationsgerät nach den Ansprüchen 5 und 7 in Verbindung miteinander,
**dadurch gekennzeichnet, dass** zur Auflage des Mittelteils (30) der der Kralle (22) zugeordneten Haarnadelfeder der untere Teile (11A) des Gehäuses (11) vorstehend eine Rippe (48A) aufweist, die halbkreisförmig verlaufend eine Höhe hat, die von einem ihrer Enden zum anderen zunimmt, und komplementär dazu der obere Teil (11B) vorstehend eine Rippe (48B) des gleichen Typs aufweist.

9. Elektrisches Installationsgerät nach Anspruch 8,
**dadurch gekennzeichnet, dass** wenigstens einer der beiden das Gehäuse (11) bildenden Teile (11A, 11B) vorstehend um seine Rippe (48A, 48B) herum mit Abstand zu dieser eine Umfassungswand (50) aufweist, die zum Halten der Haarnadelfeder (28) geeignet ist.

10. Elektrisches Installationsgerät nach einem der Ansprüche 1 bis 6,
**dadurch gekennzeichnet, dass** die der Kralle (22) zugeordnete Haarnadelfeder (28) mit ihrem Mittelteil (30) zwischen einem Absatz (52) des Gehäuses (11) und einem mit diesem fest verbundenen Bördelrand (53) eingefügt ist.

11. Elektrisches Installationsgerät nach Anspruch 10,
**dadurch gekennzeichnet, dass** der Bördelrand (53) einem Schaft (54) zugehörig ist, der vom Gehäuse (11) getrennt von diesem gestützt wird und mit dem die Schraube (23), durch die die Kralle (22) betätigt wird, in Schraubeingriff steht.

12. Elektrisches Installationsgerät nach Anspruch 10,
**dadurch gekennzeichnet, dass** der Bördelrand (53) mit dem Gehäuse (11) in einem Stück ausgebildet ist.

13. Elektrisches Installationsgerät nach einem der Ansprüche 1 bis 12,
**dadurch gekennzeichnet, dass** der Mittelteil (24) der Kralle (22) in Bezug auf die Ausdehnungsrichtung ihrer seitlichen Schenkel (27) allgemein schräg verläuft und in der Nähe ihrer seitlichen Schenkel (27) zwischen diesen nach außen gerichtet einen Fortsatz (32) aufweist, der mit seinem bewegenden Teil (33) einen Dieder (34) mit stumpfem Winkel (A) bildet, wobei die Konkavität des Dieders (34) zu den seitlichen Schenkeln (27) gerichtet ist.

14. Elektrisches Installationsgerät nach einem der Ansprüche 1 bis 13,
**dadurch gekennzeichnet, dass** die seitlichen Schenkel (27) der Kralle (22) jeweils einen Rücksprung (38) aufweisen, durch den sie mit dem entsprechenden seitlichen Flügel (31) der Haarnadelfeder (28), die einer derartigen Kralle (22) zugeordnet ist, in Eingriff stehen.

15. Elektrisches Installationsgerät nach einem der Ansprüche 1 bis 14,
**dadurch gekennzeichnet, dass**, da das Gehäuse (11) zwischen den seitlichen Schenkeln (27) der Kralle (22) eine Erhebung (40) aufweist, mit deren Hilfe die die Kralle betätigende Schraube (23) wirkt, diese Erhebung (40) seitlich an den Kanten ihrer Vorderseite entlang über wenigstens einem Teil der Höhe der Vorderseite Stege (45) aufweist, die sich jeweils in Richtung ihrer seitlichen Schenkel (27) bis in deren Nähe erstrecken.

16. Elektrisches Installationsgerät nach einem der Ansprüche 1 bis 15,
**dadurch gekennzeichnet, dass** zwei Krallen (22) in bezüglich einander diametral entgegengesetzten Positionen vorgesehen sind.
